**Europäisches Patentamt**

(19) **European Patent Office**

**Office européen des brevets**

(11) Veröffentlichungsnummer: **0 122 378**
**B1**

(12) # EUROPÄISCHE PATENTSCHRIFT

(45) Veröffentlichungstag der Patentschrift:
**09.03.88**

(51) Int. Cl.⁴: **F 16 K 3/34**

(21) Anmeldenummer: **84101320.4**

(22) Anmeldetag: **19.03.82**

(60) Veröffentlichungsnummer der früheren Anmeldung
nach Art. 76 EPÜ: **0061415**

(54) **Ventil für hydraulische Systeme.**

(30) Priorität: **20.03.81 DE 3110907**

(43) Veröffentlichungstag der Anmeldung:
**24.10.84 Patentblatt 84/43**

(45) Bekanntmachung des Hinweises auf die Patenterteilung:
**09.03.88 Patentblatt 88/10**

(84) Benannte Vertragsstaaten:
**AT CH FR GB IT LI NL SE**

(56) Entgegenhaltungen:
**EP - B - 0 061 415**
**DE - B - 1 182 001**
**DE - B - 1 804 026**
**GB - A - 802 845**
**US - A - 3 460 575**
**US - A - 3 580 286**
**US - A - 3 987 999**

(73) Patentinhaber: **Johann Weiss Maschinenbau,
D-7799 Illmensee (DE)**

(72) Erfinder: **Weiss, Johann, D-7799 Illmensee/Krumbach
(DE)**

(74) Vertreter: **Hiebsch, Gerhard F., Dipl.-Ing.,
Erzbergerstrasse 5A Postfach 464, D-7700 Singen 1 (DE)**

## Beschreibung

Die Erfindung betrifft ein Drosselrückschlagventil für hydraulische Systeme mit von achsgerichteten Durchgangsbohrungen als Strömungsweg eines Strömungsmediums im Bereich eines Ventilkopfes abgehenden Querbohrungen, die in Drosseleinrichtung gesehen vor bzw. nach dem Ventilkopf angeordnet sind, wobei an der Mündung wenigstens einer Querbohrung an einer Ringaussenfläche eines von einer Hülse umgebenen Ventilgehäuses in die Ringaussenfläche eine Feinsteuernut eingeformt ist.

Ein derartiges Ventil mit von einer Stellhülse umfangenem hohlen Ventilgehäuse ist der DE-B-1 804 026 zu entnehmen. Vom Hohlraum des Ventilgehäuses gehen radiale Durchgangs- oder Drosselbohrungen für das Strömungsmedium aus, mit denen die Strömung gesteuert wird; in Abhängigkeit von der Grösse der Berührungsbereiche zwischen den einander gegenüberstehenden Flächen gelangt ein mehr oder minder grosser Durchflussstrom durch das Ventil. An einigen der Mündungen der Durchgangsbohrungen sind in Draufsicht dreiecksförmige Kerben als sogenannte Feinsteuernuten vorgesehen, die leicht mittels eines Prägestempels eingebracht werden können. Die Spitzen dieser Dreiecke weisen in der ringförmigen Aussenfläche in achsparallele Richtung, die Länge dieser jeweils ihre Mündung umgebenden dreieckigen Vertiefungen misst nur wenig mehr als der Bohrungsdurchmesser.

Ein grosser Nachteil der bekannten Ventile und Drosseln für hydraulische Strömungsmedien ist darin zu sehen, dass der Innendruck eine Verformung der Ventil- oder Drosselhülse verursacht; bei Drücken bis zu 350 bar setzt sich die Drosselhülse zwischen den Strömungskanälen des Ventilgehäuses fest, über denen sie sich weitet. Aus diesem Grunde ist es beispielsweise nur bedingt möglich, herkömmliche Ventile unter Druck zu verstellen, da die drucklosen Kanten Ventilkörper und Drosselhülse beschädigen.

Angesichts dieser Gegebenheiten hat sich der Erfinder das Ziel gesetzt, ein Drosselrückschlagventil der eingangs erwähnten Art zu schaffen, das unter Druck verstellt zu werden vermag.

Zur Lösung dieser Aufgabe führt, dass von der Mündung der Querbohrungen eine in der Ringaussenfläche des Ventilgehäuses eingeformte ringartige Umfangskerbung ausgeht, welche mehrere radiale Querbohrungen der Ringaussenfläche verbindet und dass die Umfangskerbung einen etwa dreiecksförmigen Querschnitt aufweist, dessen Öffnungswinkel bevorzugt 60° beträgt.

Diese Umfangskerbung verhindert die Verformung der Hülse weitestgehend, da sie dort, wo bisher die Hülsenverformung erzwungen wird, einen Druckabbau veranlasst. Die Folge hiervon ist zum einen – wie gesagt – das Fehlen der Verformung der Hülse und zum anderen die Möglichkeit, die Drosselhülse auch bei höchsten Drücken mühelos zu verstellen, ohne dass es zu irgendwelchen Beschädigungen käme. Jene an sich bekannten radialen Querbohrungen reichen von einem Hohlraum bzw. einer Axialbohrung des Ventilgehäuses bis zur Ringaussenfläche und bilden dort jene Mündungen, welche die Umfangskerbung erfindungsgemäss durchbrechen.

Die Umfangskerbung verbindet auch die von wenigstens einem Teil der Querbohrungen ausgehenden Feinsteuernuten, die gemäss den Ansprüchen 6 und 7 als gekrümmte Kurvenstücke ausgebildet sind. Die genannten Feinsteuernuten sind gleichzeitig Gegenstand der Ansprüche 1 bis 10 des Stammespatents EP-B-0 061 815. Bei diesen Feinsteuernuten handelt es sich um Dosierkurven für das Hydraulikmedium und zwar für einen konstanten Durchfluss im unteren Bereich ab 0,04 ltr. je Min. – es werden hier Durchflussmengen erreicht, die 10-fach geringer sind als die bisher an der unteren Grenze möglichen Dosiermengen und bei denen die Verstellbarkeit unter Druck von besonderer Bedeutung ist.

Auch für Nadelventile wird durch die erfindungsgemässe Ausbildung eine derartige Reduzierung der Durchflussmengen erreicht; für im Handel befindliche Nadelventile ist als untere Grenze derzeit der Durchfluss von 0,2 ltr. je Min. bekannt.

Die erwähnten Kurvenstücke der Feinsteuernuten verlaufen erfindungsgemäss nicht achsparallel, aber auch nicht im rechten Winkel zur Umfangskerbung, da sie dann in jene Umfangskerbung fallen würden. Allerdings kann es auch im Rahmen einer verschlechterten Ausführungsform möglich sein, dass die Umfangskerbung an einer oder an mehreren Stellen unterbrochen ist.

Die bevorzugte Lage der Kurvenstücke der Feinsteuernuten wird von einem spitzen Anfangsneigungswinkel zur Umfangskerbung bestimmt, der bevorzugt etwa 15° beträgt und sich an dem in der Hülse durch ein Gewinde haltenden Ventilgehäuse in Einschraubdrehrichtung öffnet.

Der Querschnitt des Kurvenstückes – ebenso wie der der Umfangskerbung – ist etwa dreiecksförmig mit einem bevorzugten Öffnungswinkel von etwa 60°.

Der Anfangswinkel zwischen Kurvenstück der Feinsteuernut und Radialebene bzw. Umfangskerbung öffnet in Einschraubdrehrichtung des Ventilkörpers; bei einem Rechtsgewinde liegt also die Kurvenspitze der Feinsteuernut rechts vom Anfang des Kurvenstückes.

Um die Handhabung und Einstellung des Ventils zu vereinfachen hat es sich als günstig erwiesen, an wenigstens einem der aus der Hülse ragenden Ende des Ventilkörpers zumindest eine Markierungseinrichtung zum Kenntlichmachen des sich beim Drehen des Ventilkörpers bzw. der Hülse ändernden Abstandes jener Markierungseinrichtung von der benachbarten Hülsenkante vorzusehen. Als Markierungseinrichtungen haben sich mehrere parallel zueinander verlaufende Markierungsringe als dienlich erwiesen, deren jeweiliger Abstand voneinander dem axialen Bewegungsweg des Ventilkörpers bei einer Umdrehung entspricht. Vier Markierungsringe erlauben also die Beobachtung des Schraubweges während vier Umdrehungen.

In der Innenwandfläche der Hülse oder des entsprechenden Hüllelementes ist in Weiterbildung der Erfindung eine ringartige Rinne vorgesehen, deren der Ringaussenfläche nächstliegende Rinnenkante vor der Einschraubbewegung des Ventilgehäuses etwa der zu ihr gerichteten Kante der Ringaussenfläche anliegt und nach der Einschraubbewegung die Querbohrungen der Ringaussenfläche oder etwa die Umfangskerbung berührt, wobei die andere Rinnenkante der Rinne stets in axialem Abstand zur Ringflächenkante steht.

Die Erfindung wird in der nachfolgenden Beschreibung bevorzugter Ausführungsbeispiele sowie anhand der Zeichnung näher erläutert; diese zeigt in:

Fig. 1: den Längsschnitt durch ein Drossel/ Rückschlag-Ventil;

Fig. 1a: einen Ausschnitt aus Fig. 1 in geänderter Lage;

Fig. 2: eine Schrägsicht auf das Drossel/Rückschlag-Ventil in teilweise geschnittener Darstellung;

Fig. 3: eine Draufsicht auf einen Teil des Ventils nach Fig. 1;

Fig. 4: einen Querschnitt durch das Ventil nach Fig. 3 nach deren Linie IV–IV;

Fig. 5: ein vergrössertes Detail aus einer Zylinderfläche des Ventils nach Fig. 3 entsprechend deren Feld V;

Fig. 6: die Abwicklung der Zylinderfläche aus Fig. 3;

Fig. 7: einen vergrösserten Teilschnitt durch die Zylinderfläche etwa nach Linie VII–VII in Fig. 6;

Fig. 8: einen Längsschnitt durch ein Drosselrückschlagventil;

Fig. 9: ein weiteres Beispiel eines Drosselrückschlagventils, ebenfalls im – teilweise wiedergegebenen – Längsschnitt;

Fig. 10: ein Diagramm für hydraulische Kenngrösse;

Fig. 11: eine Draufsicht auf ein Drossel/Rückschlag-Ventil zur Erläuterung der Fig. 10.

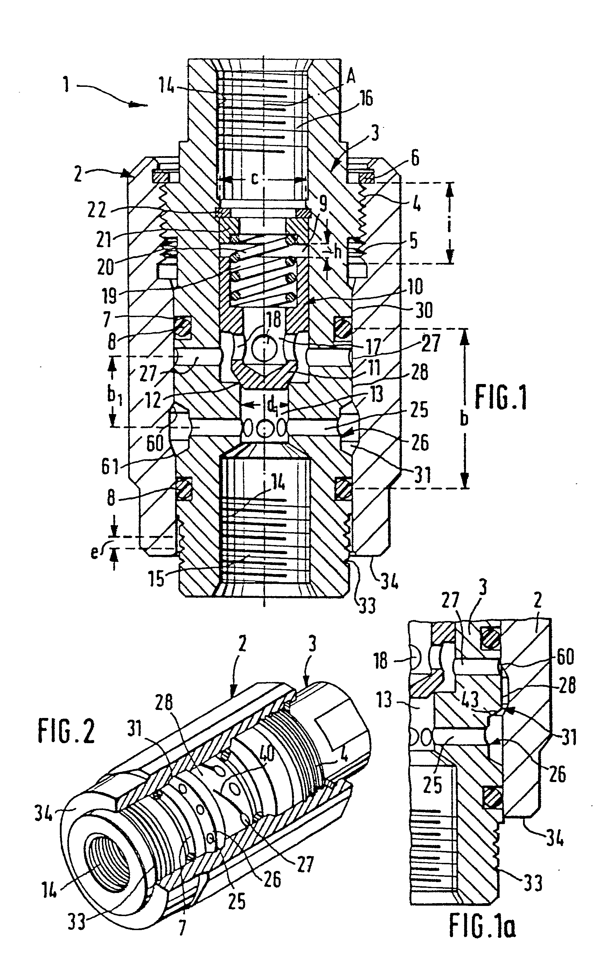

Fig. 1 zeigt ein Drossel/Rückschlag-Ventil 1 zum Einbau in eine nicht weiter dargestellte Hydraulikleitung für einen Durchfluss in Richtung der Ventillängsachse A.

In einer Hülse 2 des Drossel/Rückschlag-Ventils 1 lagert ein in diese eingeschobenes Ventilgehäuse 3, das mit einem Gewindekragen 4 in ein Hülsengewinde 5 der Länge i eingebracht und in der Hülse 2 durch einen Sprengring 6 gegen ein Herausdrehen gesichert ist. In Umfangsnuten 7 des Ventilgehäuses 3 sind – in axialem Abstand b voneinander – O-Ringe 8 angebracht.

Das Ventilgehäuse 3 weist einen zylindrischen Kolbenraum 9 für einen Kolben 10 auf, dessen sich konisch verjüngender Ventilkopf 11 mit einer Ringschulter 12 den Ventilsitz bildet. Die Ringschulter 12 befindet sich am Übergang zwischen dem Kolbenraum 9 eines Durchmessers c von beispielsweise 11 mm einerseits und einer Axialbohrung 13 geringeren Durchmessers $d_1$ von beispielsweise 6 mm anderseits. An die Axialbohrung 13 schliesst eine mit Innengewinde 14 versehene Durchgangsbohrung 15 an, die einen Eingang bildet und deren Weite jener des Kolbenraums 9 etwa entspricht. Ebenfalls findet sich im anderen Ende des Ventilgehäuses 3 eine entsprechende Durchgangsbohrung 16, die im gewählten Ausführungsbeispiel des Ausgang bildet.

Der Ventilkopf 11 ist mit einer axialen Bohrung als Innenraum 17 versehen, der durch Radialbohrungen 18 mit dem Kolbenraum 9 hydraulisch verbunden ist.

An jenen Innenraum 17 schliesst ein Federraum 19 im Kolben 10 an. Der Federraum 19 nimmt eine Druckfeder 20 auf, die andernends in einem Lagerring 21 festliegt, der sich gegen einen Seegerring 22 abstützt. Die Druckfeder 20 hält den Ventilkopf 11 an der Ringschulter 12. Der Kolbenhub ist mit n bezeichnet.

Sowohl von der Axialbohrung 13 als auch vom Kolbenraum 9 gehen radiale Querbohrungen 25 bzw. 27 als Strömungskanäle aus und durchsetzen das Ventilgehäuse 3 in einem Abstand $b_1$ voneinander von beispielsweise 9 mm. Die Querbohrungen 25 der Axialbohrung 13 münden in einer Umfangsnut 26 des Ventilgehäuses 3, wogegen die – im gewählten Ausführungsbeispiel acht – Strömungskanäle bzw. Querbohrungen 27 des Kolbenraumes 9 in einer Ringaussenfläche 28 enden, die als zylindrische Ringaussenfläche ausgebildet ist. Die Ringaussenfläche 28 wird einerseits von jener Umfangsnut 26 begrenzt sowie anderseits von einer der Umfangsnuten 7 für einen O-Ring 8.

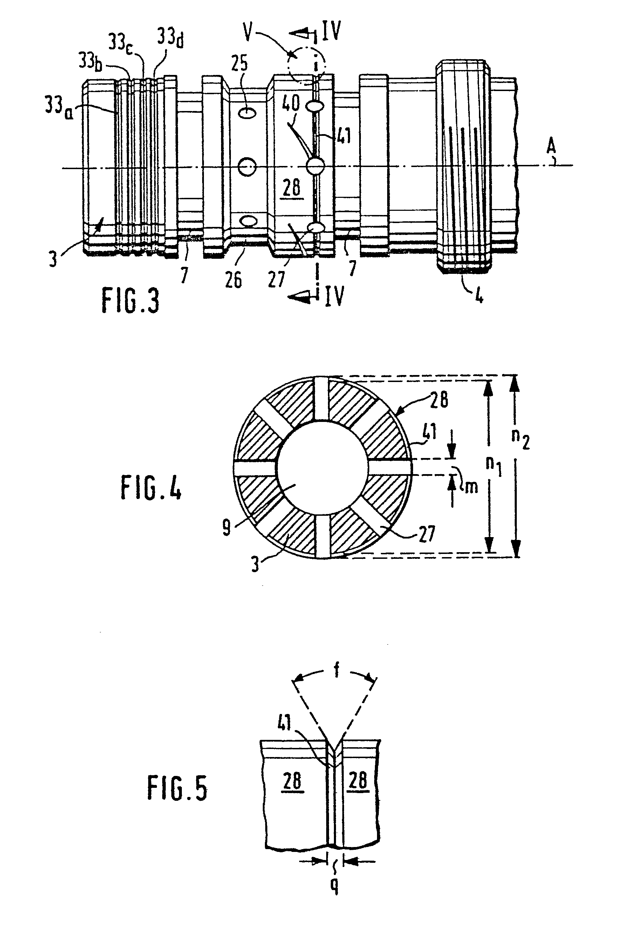

In die Innenwandfläche 30 der Hülse 2 ist eine ringartige Rinne 31 eingeformt, die jener Umfangsnut 26 des Ventilgehäuses 3 etwa gegenübersteht. Die relative Stellung der Umfangsnut 26 zur Rinne 31 kann durch Schraubdrehung des Ventilgehäuses 3 an der Gewindepaarung 4/5 eingestellt werden, wobei die jeweilige Einstellung durch vier Markierungsnuten 33 kenntlich gemacht ist; da der Abstand e zwischen den Markierungsnuten 33 dem Masse des axialen Schubweges des Ventilgehäuses 3 bei einer ganzen Umdrehung (360°) entspricht, gibt die Zahl der ausserhalb der Hülsenkante 34 erkennbaren Markierungsnuten 33 die Anzahl durchgeführter Umdrehungen an. Der besseren Übersichtlichkeit halber sind in Fig. 3 die vier Markierungsnuten mit $33_a$, $33_b$, $33_c$ und $33_d$ bezeichnet.

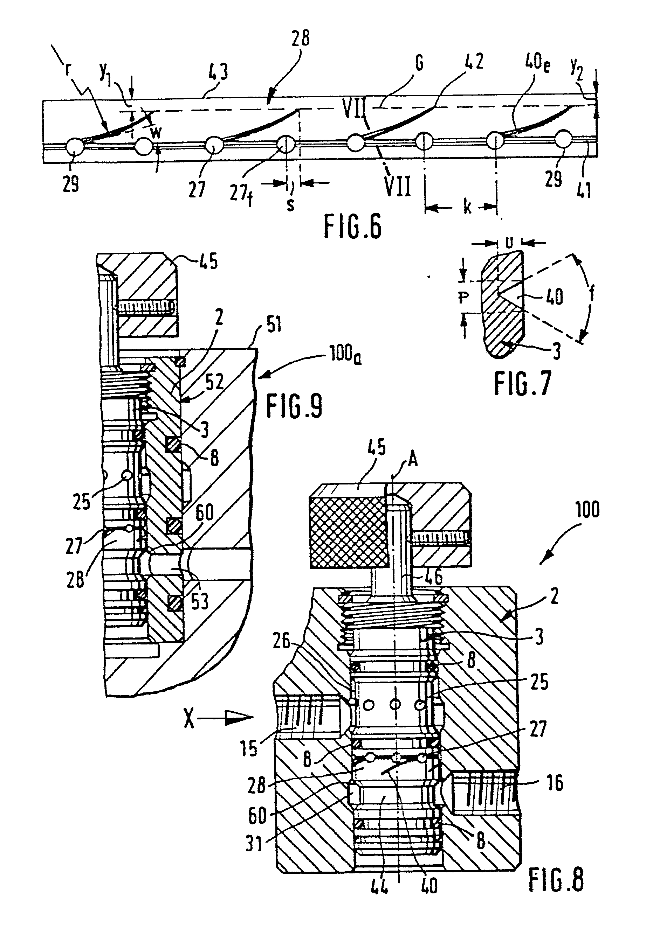

Wie die Fig. 2 und 3 deutlich werden lassen, sind in die zylindrische Ringaussenfläche 28 endliche Kurvenstücke als Feinsteuernuten 40 eingeformt, die an den Querbohrungen 27 enden. Deren Mündungen 29 sind durch eine endlose Umfangskerbung 41 miteinander verbunden; die Umfangskerbung 41 berührt die Kanten der Mündungen 29 der Querbohrungen 27 neben den Feinsteuernuten 40. Im gewählten Beispiel beträgt der innere Durchmesser $n_1$ der Umfangskerbung 41 21,5 mm, hingegen der Durchmesser $n_2$ des jene Ringaussenfläche 28 erzeugenden Ventilgehäuseabschnittes 22 mm bei einem Durchmesser m der Querbohrung 27 von 2 mm. Der Öffnungswinkel f des V-förmigen Querschnittes der Umfangskerbung 41 misst 60°, die Kerbweite q 0,4 mm. Im übrigen lässt Fig. 7 erkennen, dass auch die Feinsteuernuten 40 von V-förmigem Querschnitt mit einem Öffnungswinkel f von 60° sind. Deren Kerbweite ist mit p bezeichnet.

Die Ringaussenfläche 28 ist in Fig. 6 in vergrössertem Massstab abgewickelt und zeigt in einem Abstand k voneinander die Mündungen 29 der acht Querbohrungen 27, die miteinander durch jene endlose Umfangskerbung 41 verbunden sind. Zu dieser verlaufen vier Kurvenstücke als Feinsteuernuten 40 – von jeder zweiten der Mündung 29 ausgehend – in einem Neigungswinkel w von etwa 15° mit einem Krümmungsradius r von beispielsweise 26 mm. Die Feinsteuernuten 40 enden jeweils im übergreifenden Abstand s vom Mittelpunkt der folgenden Querbohrung (27f in Fig. 6), wobei jener Abstand s etwa dem Durchmesser m der Querbohrung 27 entspricht. Der Randabstand $y_1$ (z.B. 1,2 mm) der in Fig. 6 linken Kurvenspitze 42 von der benachbarten Flächenkante 43 ist kürzer als der entsprechende Randabstand $y_2$ (z.B. 1,7 mm) der rechten Feinsteuernut $40_e$, was in der Zeichnung mittels einer Hilfsgeraden G durch die Kurvenspitzen 42 deutlich gemacht ist. Die Tiefe u der Feinsteuernuten 40 (Fig. 7) beträgt an der Querbohrung 27 etwa 0,3 mm und nimmt stetig bis zur Kurvenspitze 42 ab, wo das Kurvenstück der Feinsteuernut 40 ausläuft.

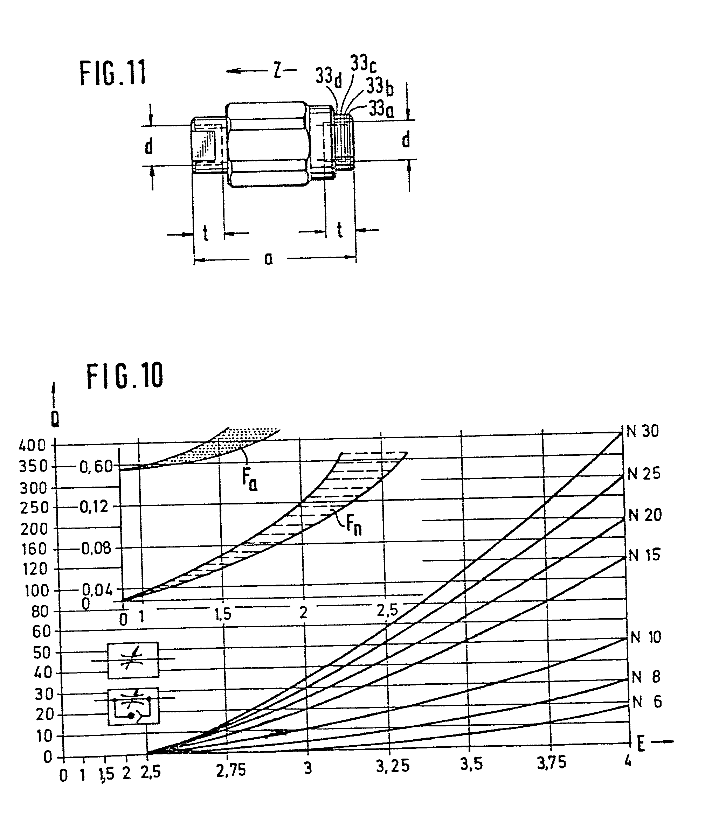

Auch bei einem in Fig. 8 in eine – nicht weiter dargestellte – Schalttafel eingebauten Drosselrückschlagventil 100 ist die Ringaussenfläche 28 mit ihren Feinsteuernuten 40 und der Umfangskerbung 41 zu erkennen. Das Ventilgehäuse 3 ist hier sowohl mit den O-Ringen 8 an einer Seite der Ringaussenfläche 28 und an der davon abgekehrten Seite der Umfangsnut 26 der anderen Querbohrungen 25 versehen als auch mit einem O-Ring 80 zwischen Querbohrungen 25 und Querbohrungen 27. Den Querbohrungen 25 ist als Eingang eine radiale Durchgangsbohrung 15 zugeordnet, wogegen die dazu höherversetzte andere radiale Durchgangsbohrung 16 als Ausgang von einer der Ringaussenfläche 28 in Durchflussrichtung x nachgeordneten ringförmigen Auslassnut 44 ausgeht. Die Verstellung des Ventilgehäuses 3 erfolgt hier über einen Stellknopf 45 an einer Stellwelle 46.

Bei einem Drosselrückschlagventil $100_a$ (Fig. 9) zum Einbau in ein anderes Gerät 51 ist die Hülse 2 an ihrer Aussenseite 52 mit Ringnuten für O-Ringe 8 versehen. Der jener Ringaussenfläche 28 nachgeordneten Auslassnut 44 steht eine Auslassöffnung 53 in der Hülse 2 gegenüber, der eine – in der nicht wiedergegebenen anderen Hälfte des Drosselrückschlagventils $100_a$ angeordnete und ebenfalls radiale – Einlassöffnung entspricht.

Sowohl die ringartige Rinne 31 an der Innenwandfläche 30 der Hülse 2 als auch eine der Auslassnut 44 im Drosselrückschlagventil 100 gegenüberliegende Hülsen Rinne 31 weisen eine Rinnenkante 60 auf, die jener Ringaussenfläche 28 benachbart ist. Vor Beginn der Einschraubbewegung des Ventilgehäuses 3 (Lage z.B. in Fig. 1) liegt die Rinnenkante 60 der zu ihr gerichteten Kante 43 der Ringaussenfläche 28 etwa an.

Im Laufe der Schraubbewegung wandern die beiden Kanten 43 und 60 gegeneinander, wobei die Rinne 31 sich an jener Ringaussenfläche 28 vorbeibewegt bis in die in Fig. 1a gezeigte Lage, in der die Rinnenkante 60 an den Querbohrungen 27 steht – auch hier bleibt die andere Rinnenkante 61 in Abstand zur Flächenkante 43.

Der Durchfluss des Hydraulikmediums, also beispielsweise einer Ölemulsion, ist zufolge der an der Ringaussenfläche 28 vorgesehenen Feinsteuernuten 40 bis zu 0,04 Liter je Minute einzustellen und damit um ein Zehnfaches geringer als bei den auf dem Markt befindlichen Hydraulikventilen. Die als Drosselbohrungen wirkenden Querbohrungen 27 der Ringaussenfläche 28 sind durch die Umfangskerbung 41 in der Lage, Druckspitzen zu verhindern und damit die Verformung der Hülse 2 weitgehend aufzuheben, die bei Drücken bis zu 350 bar sonst an der Hülse 2 zwischen den Querbohrungen 25 und den Querbohrungen 27 des Ventilgehäuses 3 als Weitung auftritt. Deshalb können herkömmliche Ventile unter Druck kaum verstellt werden; die drucklosen Kanten beschädigen das Ventilgehäuse 3 und die Hülse 2.

Fig. 10 zeigt Nennwertkurven N entsprechend der nachfolgenden Tabelle, in der für jeden Nennwert der Anschlussdurchmesser d, die Gesamtlänge a und die Anschlusstiefe t für die einzelnen Ventilgrössen zu erkennen sind. Eine Erläuterung hierzu gibt Fig. 11, aus der auch die Ventileinstellung dank der Markierungsnuten 33a bis 33d und die Einstelldrehrichtung Z zu entnehmen sind:

| N | d | a | t |
|---|---|---|---|
| 6 | 1/4″ | 65 | 12 |
| 8 | 3/8″ | 75 | 12 |
| 10 | 1/2″ | 80 | 14 |
| 15 | 3/4″ | 100 | 16 |
| 20 | 1″ | 110 | 18 |
| 25 | 11/4″ | 130 | 20 |
| 30 | 11/2″ | 150 | 22 |

Fig. 10 zeigt also jene Nennwertkurven über der Einheit E (Einstellwert/Umdrehungen); die Ordinate gibt den Durchflussstrom Q in 1/min. wieder. Das Feld $F_a$ zeigt den Kennwertbereich für alte Ventilausführungen, das Feld $F_n$ die entsprechenden Werte für die erfindungsgemässen Kenngrössen.

Die Betriebsbedingungen können der nachfolgenden Tabelle entnommen werden:

| Druckflüssigkeit | Mineralöl nach DIN 51524 und DIN 51525 |
|---|---|
| Temperaturbereich | −30 bis +80°C |
| Viskositätsbereich | 2,8 bis 380 cSt |
| Betriebsdruck | 5 bis 320 bar |
| Prüfdruck | 250 bar |

## Patentansprüche

1. Drosselrückschlagventil für hydraulische mit von achsgerichteten Durchgangsbohrungen (15, 16) als Strömungsweg eines Strömungsmediums im Bereich eines Ventilkopfes (11) abgehenden Querbohrungen (27, 25), die in Drosselrichtung gesehen vor (Querbohrung 27 mit Feinsteuernut/en 40) bzw. nach dem Ventilkopf (Querbohrung 25) angeordnet sind, wobei an der Mündung (29) wenigstens einer Querbohrung (27) an einer Ringaussenfläche (28) eines von einer Hülse (2) umgebenen Ventilgehäuses (3) in die Ringaussenfläche (28) eine Feinsteuernut (40) eingeformt ist, dadurch gekennzeichnet, dass von der Mündung (29) der Querbohrungen (27) eine in die Ringaussenfläche (28) des Ventilgehäuses (3) eingeformte ringartige Umfangskerbung (41) ausgeht, welche mehrere radiale Querbohrungen (27) der Ringaussenfläche (28) verbindet, und dass die Umfangskerbung (41) einen etwa dreiecksförmigen Querschnitt aufweist, dessen Öffnungswinkel (f) bevorzugt 60° beträgt.

2. Ventil nach Anspruch 1, dadurch gekennzeichnet, dass der Durchmesser (m) der Querbohrung (27) ein Mehrfaches der Kerbweite (q) der Umfangskerbung (41) des V-förmigen Querschnitts ist.

3. Ventil nach Anspruch 2, dadurch gekennzeichnet, dass sich der Durchmesser (m) zur Kerbweite (q) verhält wie 1:5.

4. Ventil nach wenigstens einem der Ansprüche 1 bis 3, dadurch gekennzeichnet, dass die Umfangskerbung (41) eine Radialebene bestimmt.

5. Ventil nach einem der Ansprüche 1 bis 4, dadurch gekennzeichnet, dass die Umfangskerbung (41) acht Querbohrungen (27) verbindet.

6. Ventil nach wenigstens einem der Ansprüche 1 bis 5, dadurch gekennzeichnet, dass die ringartige Umfangskerbung (41) die in der Ringaussenfläche (28) verlaufenden, von wenigstens einem Teil der Querbohrungen (27) ausgehenden, als gekrümmte Kurvenstücke ausgebildeten Feinsteuernuten (40) verbindet, deren jede mit der Umfangskerbung (41) einen Neigungswinkel (w) einschliesst.

7. Ventil nach Anspruch 6, dadurch gekennzeichnet, dass der Neigungswinkel (w) etwa 15° beträgt und sich an dem in der Hülse (2) durch ein Gewinde (4) haltenden Ventilgehäuse (3) in Einschraubdrehrichtung öffnet.

8. Ventil nach einem der Ansprüche 1 bis 7, dadurch gekennzeichnet, dass in der Innenwandfläche (30) der Hülse (2) eine ringartige Rinne (31) vorgesehen ist, deren der Ringaussenfläche (28) nächstliegende Rinnenkante (60) vor der Einschraubbewegung des Ventilgehäuses (3) etwa der zu ihr gerichteten Kante (43) der Ringaussenfläche (28) anliegt und nach der Einschraubbewegung die Querbohrungen (27) der Ringaussenfläche (28) oder etwa die Umfangskerbung (41) berührt, wobei die andere Rinnenkante (61) der Rinne (31) stets in axialem Abstand zur Ringflächenkante (43) steht.

## Claims

1. A one-way restrictor for hydraulic systems having cross holes (27, 25) as a flow path for a flow medium coming off axial bolt holes (15, 16) in the region of a valve head (11), the cross holes being arranged – seen in the throttle direction – before (cross hole 27 with fine control groove/s 40) or after the valve head (cross hole 25), with a fine control groove (40) being provided at the orifice (29) of at least one cross hole (27) on the outer surface of the ring (28) of a valve chamber (3) surrounded by a bush (2), characterized in that an annular circumferential notching (41) formed in the outer surface of the ring (28) of the valve housing starts from the orifice (29) of the bolt holes (27) and connects several radial bolt holes (27) of the outer surface of the ring (28), and that the circumferential notching (41) shows an approximately triangular cross-section whose aperture angle (f) is preferably 60°.

2. A valve according to claim 1, characterized in that the diameter (m) of the cross bore (27) is a multiple of the width of notch (q) of the circumferential notching (41) of the V-shaped cross section.

3. A valve according to claim 2, characterized in that the ratio of the diameter (m) to the width of notch (q) is equal to that of 1:5.

4. A valve according to at least one of claims 1 to 3, characterized in that the circumferential notching (41) determines a radial plane.

5. A valve according to claims 1 to 4, characterized in that the circumferential notching (41) connects eight cross bores (27).

6. A valve according to at least one of claims 1 to 5, characterized in that the annular circumferential notching (41) connects the fine control grooves (40) being provided in the ring outer surface (28), departing from at least part of the cross bores (27) and having the shape of a curve, each of which forms an angle of inclination (w) with the circumferential notching (41).

7. A valve according to claim 6, characterized in that the angle of inclination (w) is about 15° and opens in the direction of insertion at the valve housing (3) retained in the bush (2) by means of a thread (4).

8. A valve according to any of claims 1 to 7, characterized in that the interior surface (30) of the bush (2) there is provided an annular groove (31) whose groove edge (60) closest the outer surface of the ring (28) approximately abuts the edge (43) – directed towards the groove edge – of the outer surface of the ring (28) prior to the screwing movement of the valve housing (3) and touches the cross holes (27) of the outer surface of the ring (28) or the circumferential notching (41) after the screwing movement, with the other groove edge (61) of the groove (31) always being at an axial distance from the annular surface edge (43).

**Revendications**

1. Soupape d'étranglement de retenue pour des systèmes hydrauliques avec des forages transversals (27, 25) comme voie d'écoulement d'un fluide partant de passages alésés axials (15, 16) dans la zone d'une tête de soupape (11), les forages transversals étant prévus – vu dans le sens d'étranglement – avant (forages transversals 27 avec gorge(s) de distribution 40) ou après la tête de soupape (forage transversal 25), à la bouche (29) d'au moins un forage transversal (27) étant pratiquée une gorge de distribution (40) dans la surface extérieure d'anneau (28) d'une cage de soupape (3) entourée d'une douille (2), caractérisée en ce qu'une rainure circonférentielle annulaire (41) pratiquée dans la surface extérieure d'anneau (28) de la cage de soupape (3) parte de la bouche (29) des forages transversals (27) et qu'elle relie plusieurs forages transversals radiaux (27) de la surface extérieure d'anneau (28) et que la rainure circonférentielle (41) présente une section à peu près triangulaire ayant de préférence un angle d'ouverture (f) de 60°.

2. Soupape selon la revendication 1, caractérisée en ce que le diamètre (m) du forage transversal (27) est un multiple de la largeur d'entaille (q) de la rainure circonférentielle (41) de la section en V.

3. Soupape selon la revendication 2, caractérisée en ce que le diamètre (m) est à la largeur d'entaille (q) comme 1 à 5.

4. Soupape selon au moins une des revendications 1 à 3, caractérisée en ce que la rainure circonférentielle (41) détermine un plan radial.

5. Soupape selon une des revendications 1 à 4, caractérisée en ce que la rainure circonférentielle (41) relie huit forages transversals (27).

6. Soupape selon au moins une des revendications 1 à 5, caractérisée en ce que la rainure circonférentielle annulaire (41) relie les gorges de distribution (40) se trouvant dans la surface extérieure d'anneau (28) partant au moins d'une partie des forages transversals (27) et présentant l'allure d'une courbe dont chacune forme un angle d'inclinaison (w) avec la rainure circonférentielle (41).

7. Soupape selon la revendication 6, caractérisée en ce que l'angle d'inclinaison (w) se monte à environ 15° et qu'il s'ouvre à la cage de soupape (3) se tenant dans la douille (2) moyennant un filet (4) dans le sens du filet.

8. Soupape selon une des revendications 1 à 7, caractérisée en ce qu'il est prévu dans la surface intérieure (30) de la douille (2) un conduit annulaire (31) dont l'arête (60) la plus proche à la surface extérieure d'anneau (28) colle par exemple à l'arête dirigée vers elle-même (43) de la surface extérieure d'anneau (28) avant le mouvement fileté de la cage de soupape (3) et qu'elle touche les forages transversals (27) de la surface extérieure d'anneau (28) ou bien la rainure circonférentielle (41) après le mouvement fileté, l'autre arête de conduit (31) se trouvant toujours à distance axiale par rapport à l'arête de la surface d'anneau (43).

FIG.1

FIG.1a

FIG.2

FIG.3

FIG.4

FIG.5

FIG.6

FIG.7

FIG.9

FIG.8

FIG.11

FIG.10